Europäisches Patentamt

(19) European Patent Office

Office européen des brevets

(11) Publication number: **0 133 472**
**B1**

(12) **EUROPEAN PATENT SPECIFICATION**

(45) Date of publication of patent specification: **27.04.88**

(51) Int. Cl.⁴: **B 65 G 1/04**

(21) Application number: **84107746.4**

(22) Date of filing: **04.07.84**

(54) Vertical stacking terminal for containers.

(30) Priority: **27.07.83 IT 1259483**

(43) Date of publication of application:
**27.02.85 Bulletin 85/09**

(45) Publication of the grant of the patent:
**27.04.88 Bulletin 88/17**

(84) Designated Contracting States:
**AT BE CH DE FR GB LI LU NL SE**

(56) References cited:
**DE-A-2 113 202**
**GB-A-1 295 649**
**US-A-3 583 584**
**US-A-3 669 288**

(73) Proprietor: **ITALIMPIANTI Società Italiana Impianti p.a.**
**Piazza Piccapietra, 9**
**I-16121 Genova (IT)**

(72) Inventor: **Lancieri, Federico**
**Via O.De Gasperi 26/1**
**I-16146 Genova (IT)**
Inventor: **Leone, Domenico**
**Via Capraia 1/3**
**I-16136 Genova (IT)**
Inventor: **Grattarola, Carlo**
**Via Emilia 16/19**
**I-16138 Genova (IT)**

(74) Representative: **Porsia, Dino, Dr. et al**
**c/o Succ. Ing. Fischetti & Weber Via Caffaro 3**
**I-16124 Genova (IT)**

Courier Press, Leamington Spa, England.

## Description

This invention relates to a vertical stacking terminal for containers, comprising at least one corridor having at both sides thereof a plurality of storage or stacking compartments in a multiple-tier arrangement and designed to receive the containers, robot transfer carriages being provided in said corridor and being movable along the corridor on horizontal runways located at each tier or level or stacking compartments and being intended to move the containers horizontally along the corridor and to introduce them into (ensilage) and retrieve them from (de-ensilage) said stacking compartments, while at least at one end of the corridor there is provided a lifting unit for moving the incoming and outgoing containers vertically and for transferring them, if necessary, from a stacking compartment to another, said lifting unit being provided with its own container-holding means which consists of a suspending frame (spreader) for a container and receives a container from the robot carriage at that tier or delivers it thereto, while at ground level there are provided suitable ingress and egress transport means adapted to pick up a container from a loading or ingress area and to deliver it to the container-holding means of the lifting unit, and to pick up the container from the container-holding means of the lifting unit and to transfer it to an unloading or egress area.

A vertical stacking terminal of this type is known from US—A—3.583.584. In this known stacking terminal, the lifting unit for moving vertically the containers consists of a hoist with a grab from which the container is suspended. The robot carriages movable along the corridor of each tier or level of stacking compartments are each confined within the respective level, i.e., they cannot pass from a level to another. It is true that by the aid of the container holding means of the lifting unit it is possible to effect the vertical handling of a container from ground level to a desired level of stacking compartments or vice versa, or from a level of stacking compartments to another one, without lifting up or handling down a robot carriage with a container thereon, but in many instances it is advantageous and desirable also to move a robot carriage, either empty or with a container, from a stacking level to another.

This problem is solved by the invention, in a vertical stacking terminal of the type as described in the preamble, with a combination of the following features.

a) the lifting unit is constituted by an elevator cabin,

b) the container-holding means (spreader) is located in the upper portion of the elevator cabin,

c) the elevator cabin is provided at its bottom with two runway sections adapted to get into alignment with the runways at each tier of the stacking compartments to permit the robot carriage of each tier to enter the elevator cabin and get out therefrom,

d) the container-holding means (spreader) has a limited vertical movement to lock and unlock the container or is stationary in combination with means to raise and lower the container in order to lock it to and unlock it from the container-holding means (spreader).

In the construction according to the invention it is therefore possible to move from ground level to a desired level of stacking compartments or vice versa, or from a level of stacking compartments to another one, as desired, either only a simple container with the aid of the container-holding means (spreader) in the upper portion of the elevator cabin, or — when needed and in compliance with the requirements of a particular handling program — also a robot carriage (either empty or with a container) by means of the two runway sections provided at the bottom of the elevator cabin.

Some advantageous embodiments of the invention are characterized in the dependant claims.

One embodiment of the vertical stacking terminal for containers according to the invention is shown diagrammatically in the accompanying drawings, wherein:

Figure 1 is a vertical longitudinal sectional view of a vertical stacking terminal for containers according to the invention;

Figure 2 is an elevational end view thereof;

Figure 3 is a vertical cross sectional view of the stacking terminal of Figures 1 and 2;

Figure 4 is a vertical cross sectional view of the corridor of the terminal, in registry with two superimposed tiers of stacking compartments with the respective robot carriages;

Figure 5 is a plan view of a robot carriage at stacking level;

Figure 6 is a cross sectional view of a robot carriage;

Figures 7 and 8 show diagrammatically the movement of the transfer trolley with respect to the corresponding bridge crane of a robot carriage;

Figure 9 is an elevational and front view of the cabin of the elevator constituting the lifting unit at an end of the corridor of the vertical stacking terminal;

Figure 10 is a top plan view of the floor of the cabin of Figure 9;

Figure 11 is a vertical cross sectional view of an ingress or egress carriage;

Figure 12 is a side elevational view of the carriage of Figure 11;

Figure 13 is a plan view thereof.

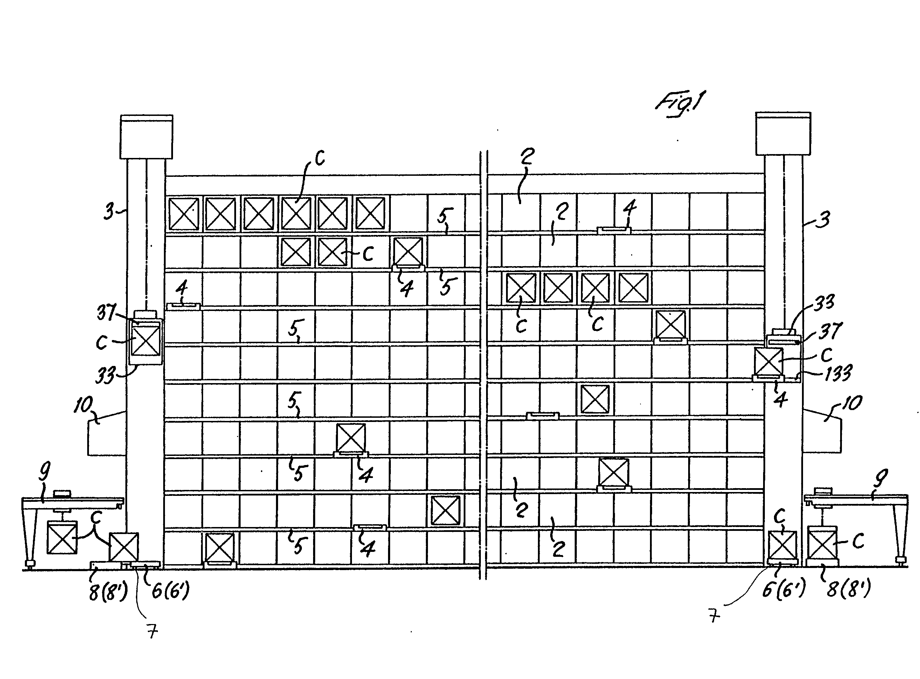

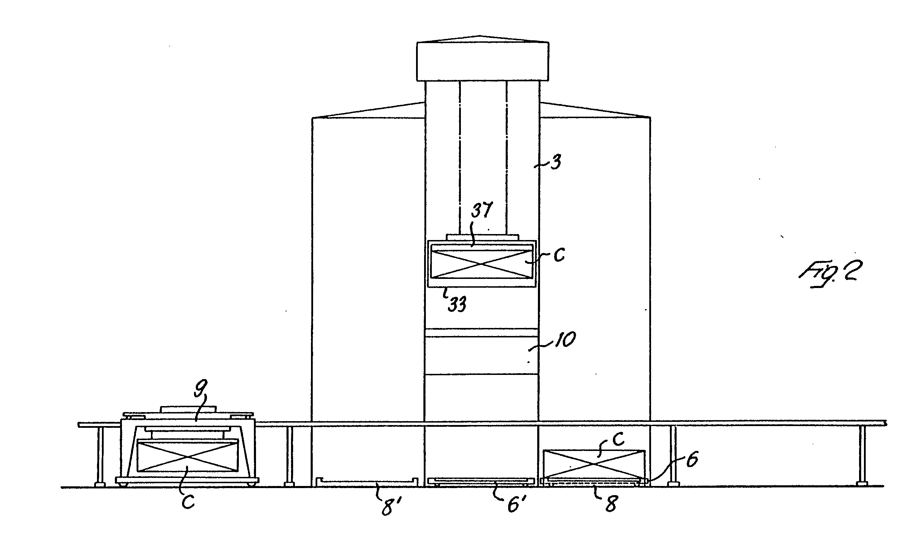

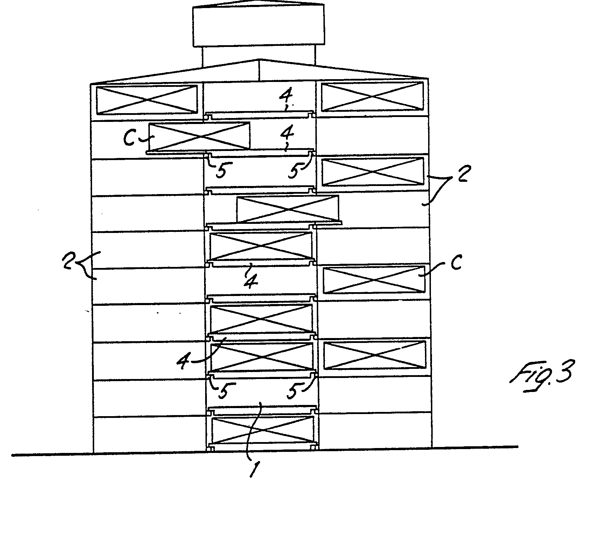

With reference to Figures 1 to 3, the vertical stacking terminal for containers comprises at least one corridor 1 having at both sides thereof a plurality of storage compartments 2 in a multiple-tier arrangement and designed to receive the containers C. The size and number of corridors 1 and stacking compartments 2, and therefore the number of containers C that can be received in the terminal depend upon the size of the containers C, the estimated yearly traffic, the maximum peak traffic and average dwell periods of the containers in the terminal. Preferably, and unlike the simplified illustration in the drawings, the vertical stacking terminal according to the invention comprises two parallel corridors 1 with respective stacking compartments 2. The stacking compartments 2 associated with one of the corridors 1 are intended for containers up to 20 ft. (6,1 m), and those associated with the other corridor 1 are intended for containers up to 40 ft. (12,2 m).

A lifting unit 3 is provided at least at one end, and preferably at both ends, of each corridor 1. Moreover, in each corridor 1 there are provided robot carriages 4 which are movable along the corridor on horizontal runways 5 located at each tier or level of stacking compartments 2 in registry with the bottom side thereof. The robot carriages 4 may be in any number which may vary from a minimum of three to a maximum depending upon the maximum number of tiers of storage compartments 2. In the drawings, we have shown, for descriptive purposes, one robot carriage 4 at each tier of storage compartments 2, but this is to be regarded as a limit case.

At ground level, at each end of the corridor/s 1 of the stacking terminal, i.e. at each end side thereof, there are provided at least one ingress carriage 6 and at least one egress carriage 6' which are movable along rails 7. Said rails 7 extend below the lifting unit/s 3 of the respective end side of the corridor/s 1 of the stacking terminal. Beside the rails 7 for the ingress and egress carriages 6, 6' the invention provides, at one side of the lifting unit 3, at least one and preferably two or more pedestals 8 for supporting the incoming containers and, at the opposite side of the lifting unit 3, at least one and preferably two or more pedestals 8' for the outgoing containers. The ingress carriage 6 moves between the lifting unit 3 and the pedestal/s 8 for the incoming containers, while the egress carriage 6' moves between the lifting unit 3 and the pedestal/s 8' for the outgoing containers. At least one portal or semi-portal crane for the loading and unloading operations (i.e. for handling the containers C between the quay and the stacking terminal and between the road and said terminal) may be moved to a position above the pedestals 8 and 8' at each end side of the stacking terminal. Preferably, one end side of the corridor/s of the stacking terminal and respective equipment may be specially designed for quay service, and the other end side of said corridor/s and respective equipment may be specially designed for road service.

At the outside, overhanging from the column of at least one of the lifting units 3, there may be provided a maintenance workshop 10 that also may serve as a store for robot carriages 4 and as an inlet and outlet area of robot carriages into and from the corridor 1. The vertical stacking terminal may comprise any suitable self-supporting structure wherein the differential distortions of the maximum dimension are within controlled limits so as to guarantee the correct operation of all the machines in the terminal. The stacking terminal may be suitably protected and covered and it may be aerated, for example by natural ventilation.

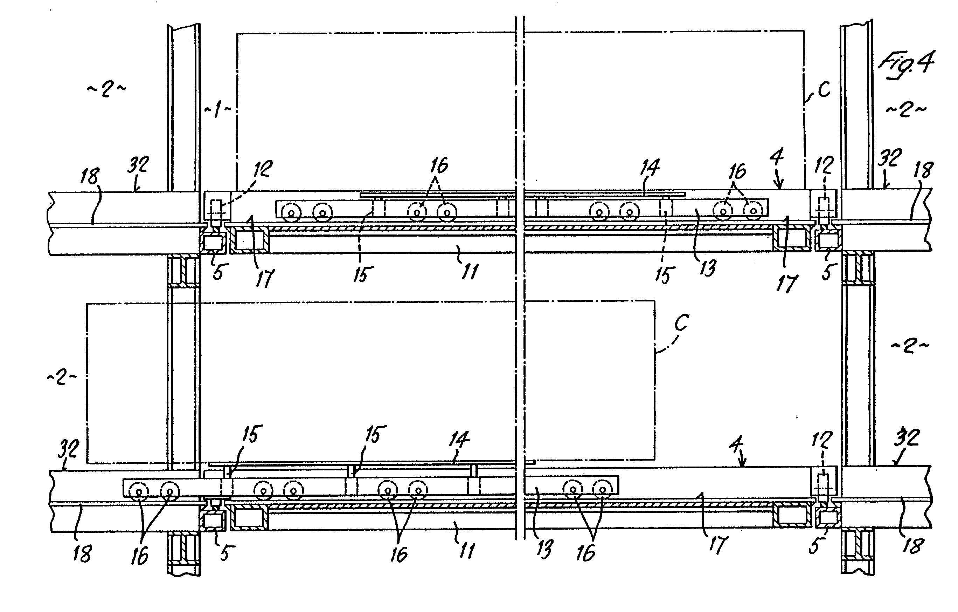

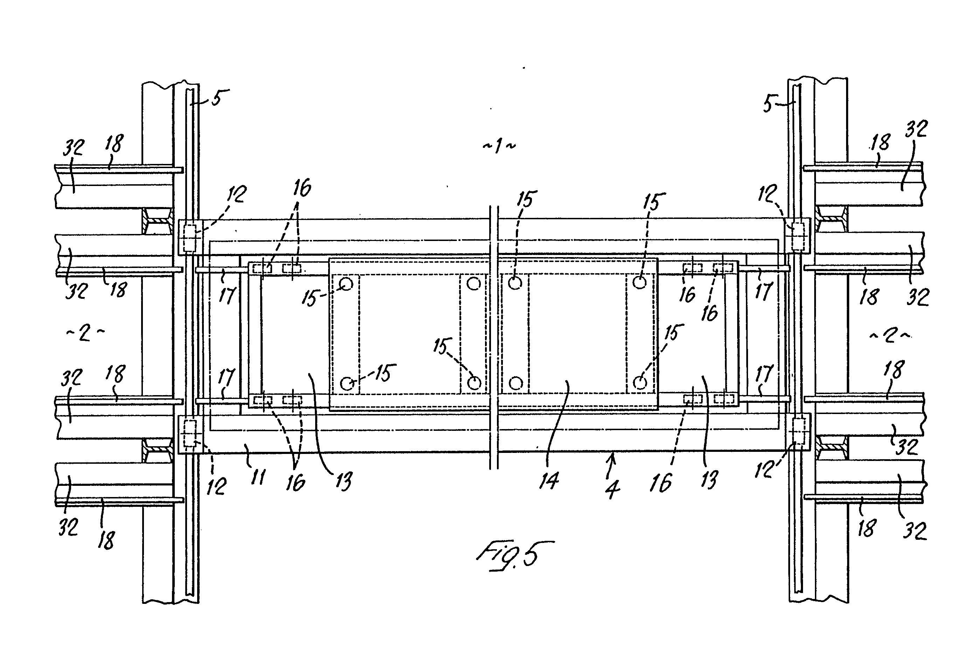

With particular reference to Figures 4 to 7, each robot transfer carriage 4 at stacking level comprises a bridge crane 11 having a framed construction of box-type beams and it moves through wheels 12 on runways 5. At least one wheel 12 at each end side of the bridge crane 11 is suitably powered at variable speed. A transfer trolley 13 movable transversely on the runways 5 and designed to carry a container C is mounted on the bridge crane 11. The transfer trolley 13 comprises a container-supporting platform 14 which may be lifted and lowered with respect to the trolley 13 with the aid of hydraulic jacks 15. In particular, the transfer trolley 14 moves through wheels 16 on rails 17 extending longitudinally of the bridge crane 11 from one end to the opposite end thereof, i.e. transversely of the runways 5, and getting aligned — when the bridge crane 4 is positioned in front of a pair of opposite stacking compartments 2 — with rails 18 provided on the bottom side of said stacking compartments 2. The transfer trolley 13 can then get off either of the opposite end sides of the bridge crane 11 and enter (by moving on the rails 17 of the bridge crane 11 and on the rails 18 of the stacking compartments 2) either of the opposite stacking compartment 2 in order to deposit therein (ensilage) or withdraw therefrom (de-ensilage) a container C, and thereafter it return to its position on the bridge crane 11.

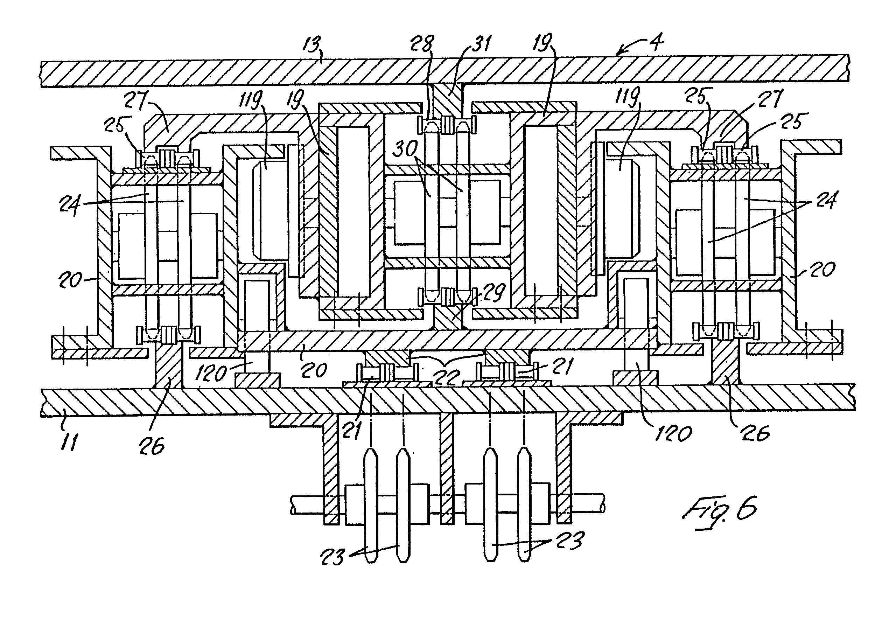

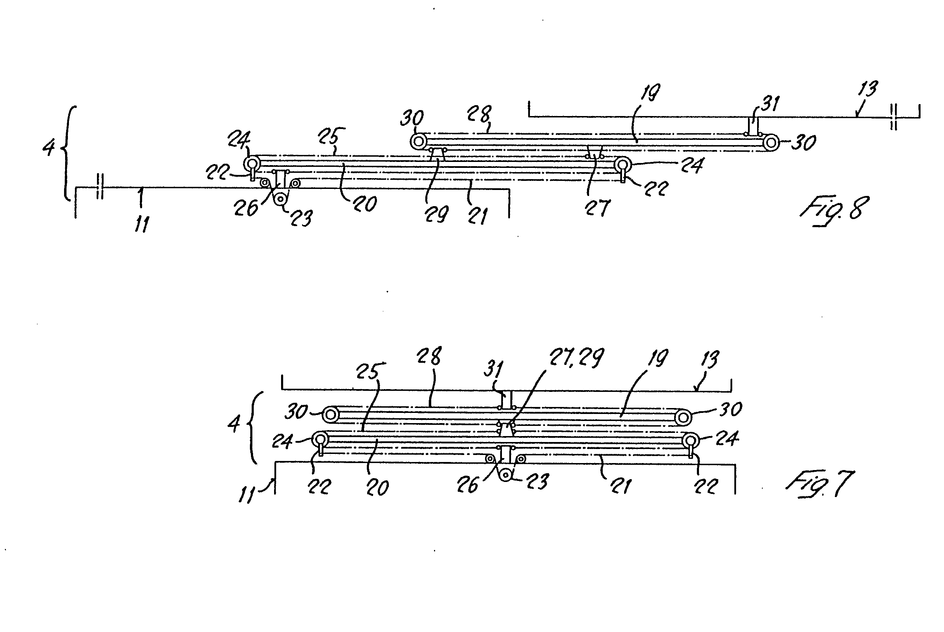

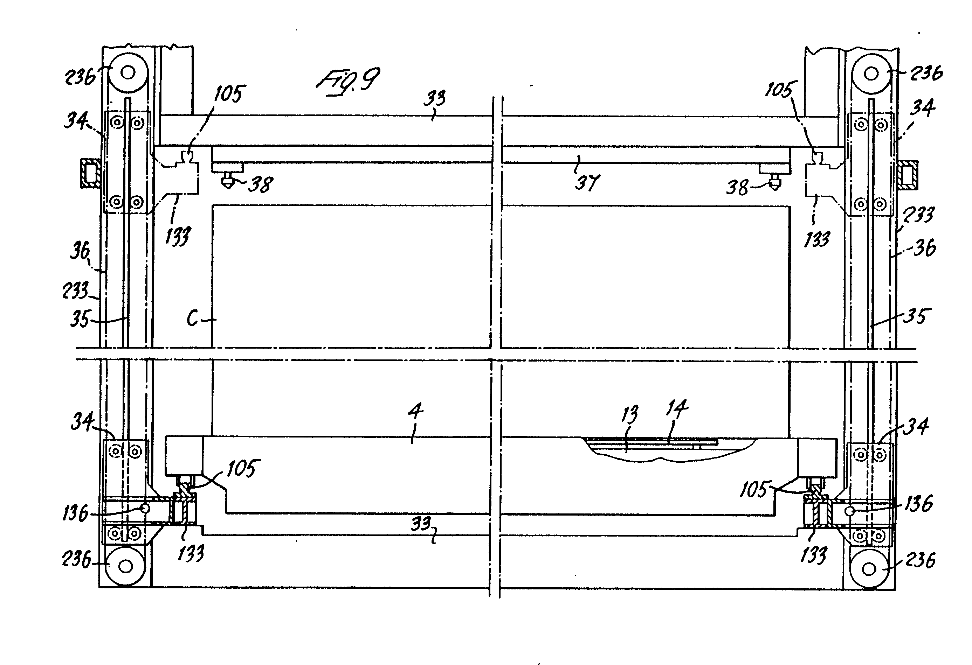

Said movement of the transfer trolley 13 with respect to the bridge crane 11 may be effected by any suitable means. In the embodiment shown in the Figures 6, 7 and 8, an upper and top slider 19 and a lower or bottom slider 20 are arranged between the bridge crane 11 and transfer trolley 13. The lower slider 20 moves through wheels 120 on the bridge crane 11 longitudinally of the latter, i.e. parallelly to the rails 17 for the transfer trolley 13, while the upper slider 19 moves in the same direction through wheels 119 on the lower slider 20. The movement of the lower slider 20 with respect to the bridge crane 11 is effected by means of chains 21 which are secured at their ends to both ends of the lower slider 20 as indicated at 22 and are passed around corresponding driving sprocket wheels 23 mounted in the intermediate portion of the bridge crane 11. The movement of the upper slider 19 with respect to the lower slider 20 is effected by means of chains 25 which are passed around sprocket wheels 24 arranged at the ends of the lower slider 20 and secured at 26 to the intermediate portion of the bridge crane 11 and at 27 to the intermediate portion of the upper slider 19. Similarly, the movement of the transfer trolley 13 with respect to the upper slider 19 is effected by means of chains 28 which are passed around sprocket wheels 30 arranged at the ends of the upper slider 19 and secured at 29 to the intermediate portion of the transfer trolley 13. When the transfer trolley 13 is in its retracted position on the bridge crane 11, the condition of the assembly is as shown in Figure 7, the upper slider 19 and lower slider 20 being then in a central position between the bridge crane 11 and transfer trolley 13. By actuating the powered driving sprocket wheels 23 in either direction, the translatory movements will be automatically obtained of the lower slider 20 with respect to the bridge crane 11, of the upper slider 19 with respect to the lower slider 20, and of the transfer trolley 13 with respect to the upper slider 19. All these translatory movements take place in the same direction, i.e. toward either end of the robot carriage 4, and their summation corresponds to the stroke required by a transfer trolley 13 to enter either of the two opposite stacking compartments 2. This condition is shown in Figure 8. The translatory speed of the upper slider 19 is greater than that of the lower slider 20, so that the former may also be called "fast" slider 19, while the latter may also be called "slow" slider 20. The translatory speed of the transfer trolley 13 is greater than that of the upper fast slider 19. The return of the transfer trolley 13 from its extended position of Figure 8 (of from the extended position off the opposite end of the slider 11) back to its retracted position on the bridge crane 11 as shown in Figure 7 is obtained by a reverse operation, i.e. by actuating the powered sprocket wheels 23 in the opposite direction.

The robot carriage 4 has the following operative cycle: to carry out the ensilage, i.e. to store into a stacking compartment 2 a container C disposed (over the lowered container-supporting platform 14) on the transfer trolley 13 retracted in its intermediate position on the bridge crane 11 (see the upper portion of Figure 4), the bridge crane 11 moves on the runways 5 at the respective tier to the desired stacking compartment 2. The container supporting platform 14 of the transfer trolley 13 is then raised by the hydraulic jacks 15, thus lifting the container C from the transfer trolley 13, and the latter is introduced as described above, together with the container C, into the stacking compartment 2, as shown in the lower portion of Figure 4. When the container C has been completely introduced into the stacking compartment 2, the container-supporting platform 14 is lowered to lay down the container C onto the suitable bearing members 32 in the stacking compartment 2. The transfer trolley 13, then, moves back onto the bridge crane 11 as described above. To carry out the de-ensilage, i.e. to retrieve a container C from a stacking compartment 2, the bridge crane moves on the runways 5 to the selected compartment and the transfer trolley 13 is introduced, with its container-supporting platform 14 in the lowered position into the stacking compartment 2 under the container C which is now supported by the respective bearing members 32. The container-supporting platform 14 is then raised and picks up the container C by lifting it from the bearing members 32 of the compartment. The transfer trolley 13 is then moved back onto the bridge crane 11 and the container-supporting platform 14 is lowered, to lay down the container C onto the fixed structure of said transfer trolley 13.

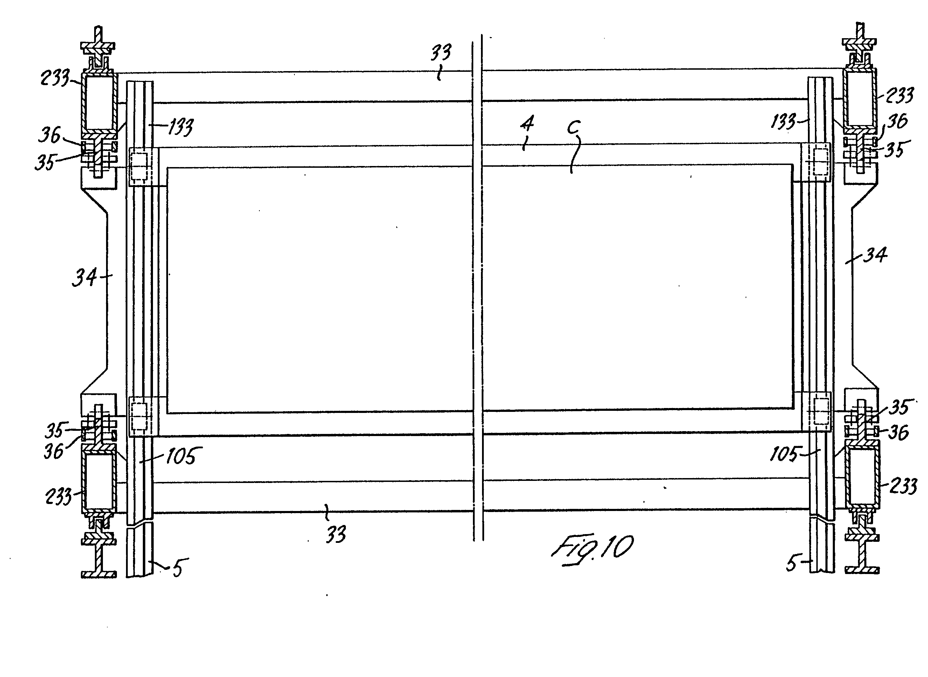

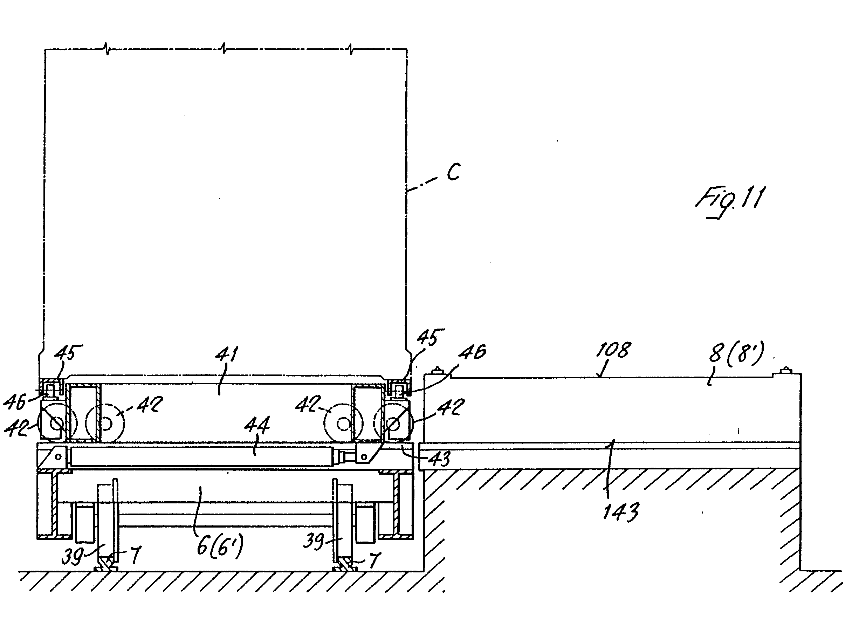

Each lifting unit 3 is formed substantially by a hydraulically-operated elevator actuated by electrical motors, preferably of a.c. type. The cabin 33 of the elevator comprises at the bottom thereof two horizontal beams 133 each provided with a section of runway 105 which may get into alignment with the runways 5 at stacking level as shown particularly in the Figures 9 and 10. When the cabin 33 of an elevator has reached the level of a tier of stacking compartments 2, the sections of runways 105 of said cabin 33 constitute an extension of the runways 5 of that tier and, therefore, permit the robot carriage to move on said sections of runways 105 into and out of the cabin 33 of the elevator. The beams 133 of the elevator cabin 33 with their runway sections 105 are mounted in said cabin so as to be raised and lowered therein between a lower position for inlet and outlet of a robot carriage 4 (shown with solid lines in Figure 9) and an upper position (shown with dot-and-dash lines in Figure 9). For this purpose, the beams 133 supporting the runway sections 105 are secured to sliders 34 which are guided to slide vertically along guide members 35 of uprights 233 in the elevator cabin 33. The vertical displacement of said sliders 34 may be obtained, for example, by means of endless chains 36 which are secured at 136 to said sliders 34 and are passed around direction-changing sprocket wheels 236 mounted at the top and bottom of the uprights 233 and suitably powered.

In the upper portion of the elevator cabin 33 there are provided container-holding means constituted by a so-called "spreader", i.e. a frame 37 for suspending a container C. The suspending frame 37 is provided at the underside thereof with means 38 to hook or lock a container C. In this exemplary embodiment, the container-suspending frame 37 is fixed in the elevator cabin 33, but in an alternative embodiment it may be raised and lowered to at least a limited extent. This type of container-suspending frames (so-called "spreaders") and their container-locking means 38 are well known to those skilled in the art and, therefore, their detailed description may be omitted.

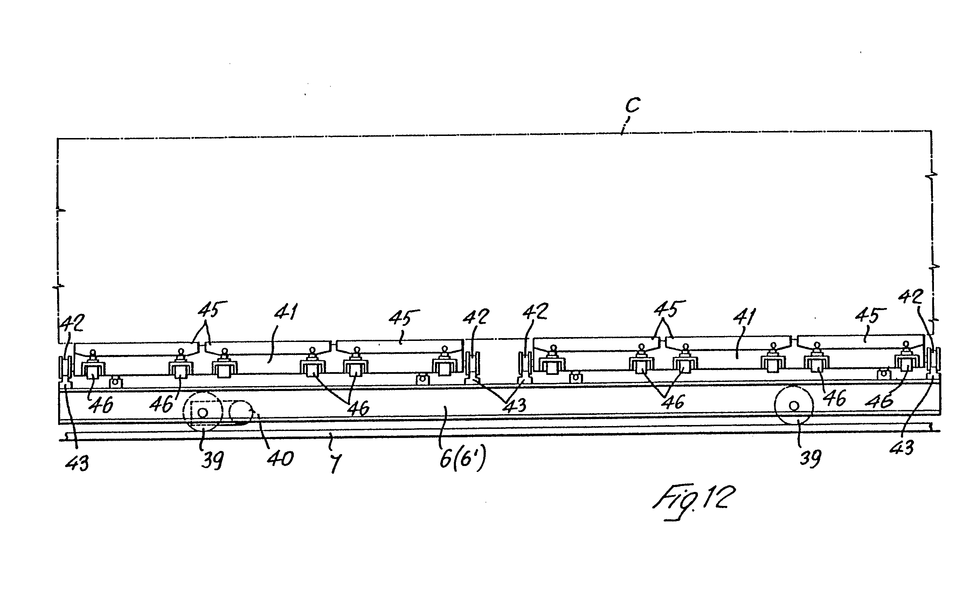

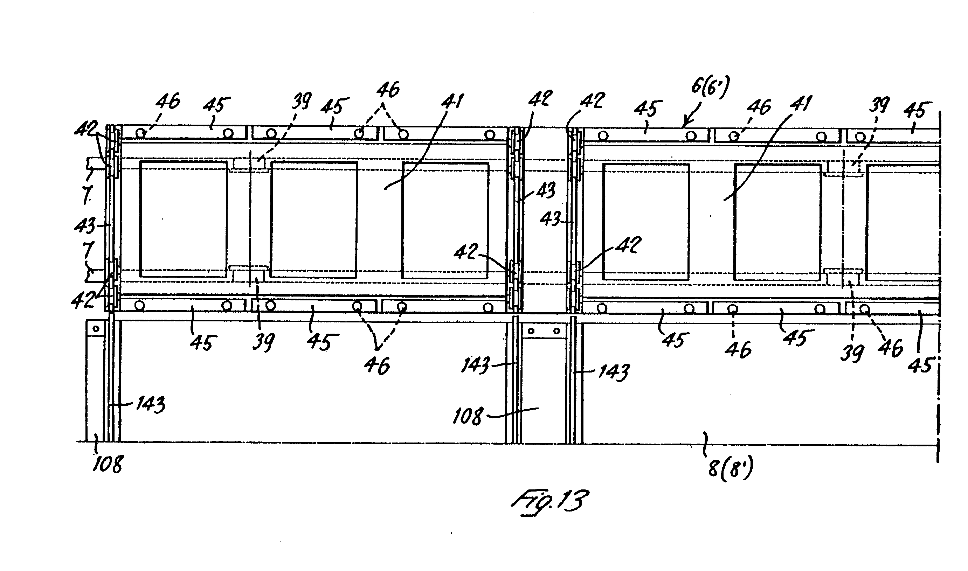

An ingress carriage 6 or egress carriage 6' at ground level is shown specifically in the Figures 11, 12 and 13. It is constituted by a railway type truck or the like moving on the rails 7 through wheels 39. Preferably, at least a pair of wheels 39 are actuated by a suitable motor 40, whereby said ingress and egress carriages 6, 6' are of self-propelled type. On each ingress or egress carriage 6, 6' there are provided one or more transfer trolleys 41 which are arranged side by side and are movable through wheels 42 along rails 43 which are secured to the carriage 6, 6' and are disposed transversely thereof, i.e. transversely of the rails 7. When an ingress or egress carriage 6, 6' has moved close to one side of a supporting pedestal 8 or 8′ for the incoming or outgoing containers, respectively, the transverse rails 43 get into alignment with corresponding rails 143 provided on the container-supporting pedestal 8 or 8′, whereby the transfer trolleys 41 of the carriage 6, 6′ may be displaced, on the rails 43, 143, from the carriage 6, 6′ onto the pedestal 8, 8′ and then back onto the carriage 6, 6′. This displacement of the transfer trolley/s 41 may be obtained by any suitable actuating means, for example by means of linear actuators 44 of hydraulic or other nature. On the transfer trolley/s 41 there are provided container-supporting beams 45 which will bear a container C laid on the ingress or egress carrriage 6, 6′ and which can be raised and lowered by hydraulic jacks 46.

Of course, the ingress and/or egress carriages 6, 6′ may be also constructed so that their transfer trolleys 41, with their respective container-raising and lowering means, may alternately get off either sides of the ingress and/or egress carriages 6, 6′, to pick up and to lay down, as desired, a container from and onto container-supporting pedestals located at both sides of the rails 7.

The vertical stacking terminal for containers as described above has the following operative cycles, which are the same at both ends of the corridor 1, i.e. at both end sides of the terminal.

Single container ingress cycle

The crane 9 lays down a container C onto the bearing members 108 of a container-supporting pedestal 8 for incoming containers. An ingress carriage 6 moves along the rails 7 close to one side of said container-supporting pedestal 8, and its transfer trolley 41 moves out transversely and laterally, with its container-supporting beams 45 in the lowered position, to get onto the rails 143 of the container-supporting pedestal 8 underneath the container C. The container-supporting beams 45 of the transfer trolley 41 are then raised, to raise and pick up the container C from the container-bearing members 108 of the container-supporting pedestal 8. The transfer trolley 41 is then retracted back onto the ingress carriage 6, and the container-supporting beams 45 are lowered. The ingress carriage 6 then moves onto the rails 7 together with the container C to a position below the lifting unit 3 and then the empty elevator cabin 33 is lowered thereon. During the descent of the cabin 33, its bottom beams 133 with the runway sections 105 are raised to their upper position, shown with dot-and-dash lines in Figure 9, to permit or facilitate the entrance of the ingress carriage 6 with the container C into said cabin 33. The container C is then locked to the spreader 37. This result can be achieved by merely lowering the elevator cabin 33 and/or lowering the spreader 37, and/or by raising the container C by means of the container-supporting beams 45 and respective jacks 46 to a position where it will be engaged by the locking means 38. The elevator cabin 33, then, begins moving upward while the ingress carriage 6 is moved out of the lifting unit 3 and is returned to its original position beside container-supporting pedestal 8 for incoming containers.

During the upward movement of the elevator cabin 33, the beams 133 with their runway sections 105 are lowered to their lower position, shown with solid lines in Figure 9, so that they will be aligned, when the cabin 33 reaches the selected tier, with the runways 5 of that tier. The robot carriage 4 at the tier — with its transfer trolley 13 retracted on the bridge crane 11 and with its container-supporting platform 14 in the lowered position — will then enter the elevator cabin 33 and will withdraw the container C from the spreader 37. To achieve this result, said spreader 37 may be lowered to lay down the container C onto the transfer trolley 13 of the robot carriage 4 or — as in the illustrated embodiment of stationary spreader 37 — this result can be achieved by raising the entire robot carriage 4 by means of the vertically movable beams 133 and/or the container-supporting platform 14. Thereafter, the robot carriage 4 gets out of the elevator cabin 33 and moves to the runways 5 in registry with the pre-established stacking compartment 2, where it deposits the container C through the ensilage operation described above with reference to Figures 4 to 8.

Single container egress cycle

The selected container C is withdrawn from the respective stacking compartment 2 by the robot carriage 4 at stacking level and through the de-ensilage operation described above with reference to Figures 4 to 8, while the elevator cabin 33 is raised up to this level with its beams 133 and supported runway sections 105 in their lowered position as shown with solid lines in Figure 9. The robot carriage 4 enters the elevator cabin 33 and the container C is locked to the spreader 37 either by lowering said spreader 37 or by raising the entire robot carriage 4 by means of the vertically-movable beams 133 and/or by raising the container C alone by means of the container-supporting platform 14. The robot carriage 4 at stacking level, then, gets out of the elevator cabin 33 on the runway 5 at that tier, while the cabin 33 is lowered to ground level. During this descent, the bottom beams 133 with the runway sections 105 are raised to their upper position shown the dot-and-dash lines in Figure 9. In the meantime, an empty egress carriage 6′ moves to a position below the lifting unit 3 and then the empty elevator cabin 33 is lowered thereon to lay down the container C onto said egress carriage 6′. This deposition of the container C onto said egress carriage 6′ and subsequent unlocking thereof from the locking means 38 of the spreader 37 may also be obtained by merely lowering the elevator cabin 33 and/or by lowering the spreader 37 and/or by raising the container-supporting beams 45 of the egress carriage 6′.

Thereafter, the egress carriage 6′ with the container C gets out of the elevator cabin 33 by moving out on the rails 7 and reaches close to one side of an egress container-supporting pedestal 8'. The transfer trolley 41 of the egress carriage 6' then moves transversely and laterally to the container-supporting pedestal 8', with the container-supporting beams 45 raised together with said container C, and — by moving on the rails 143 of the container supporting pedestal — it brings the container C above the bearing members 108 of pedestal 8'. The container-supporting beams 45 are then lowered to lay down the container C onto the bearing members 108 of the egress container-supporting pedestal 8', after which the transfer trolley 41 is retracted onto the egress carriage 6'. Thereafter, the crane 9 picks up the container C from the container-supporting pedestal 8' and lays it down onto a further transport means.

Combination ingress and egress cycle

A container C to be increased into the terminal is laid down by the crane 9 onto an ingress container-supporting pedestal 8 and is then picked up therefrom by the ingress carriage 6 by means of its transfer carriage 41 as described above. At the same time, an egress carriage 6' moves to a position below the lifting unit 3, while a container C to be retrieved from the terminal is withdrawn (de-ensilage) from the respective stacking compartment 2 by means of the robot carriage 4 at stacking level as described above. The elevator cabin 33 moves to said level with the beams 133 and respective runway sections 105 in their lowered position. The robot carriage at stacking level enters the elevator cabin 33, delivers the container C to the spreader 37 and then gets out of the cabin 33 on the runways 5 at that tier. The elevator cabin 33 is then lowered to ground level and during this descent the beams 133 with the runway sections 105 are raised. At ground level, the elevator cabin 33 lays down the outgoing container C, as described above, onto the egress carriage 6' waiting there. The ingress carriage 6 and egress carriage 6' are then moved simultaneously, whereby the egress carriage 6' gets out of the cabin 33 and moves to a position beside an egress container-supporting pedestal 8', while the ingress carriage 6 enters the elevator cabin 33. The container C to be stored is picked up from the ingress carriage and locked to the spreader 37 of the elevator cabin 33 as described above, after which the cabin 33 is raised to the selected level comprising the stacking compartment 2 wherein the incoming container is to be stored. During the upward movement the beams 133 with the runway sections 105 are lowered. The robot carriage 4 of said tier then enters the elevator cabin 33, withdraws the container C from the spreader 37 as described above and then gets out of said cabin 33 together with the container C and moves to the front side of the selected stacking compartment 2 to introduce and lay down therein (ensilage) the container, as described above. At the same time, at ground level, the egress carriage 6' delivers the container C onto the egress container-supporting pedestal 8', as described above. The egress carriage 6' and ingress carriage 6 are then returned to their original positions the former below the lifting unit 3 and the latter beside an ingress container-supporting pedestal 8, to repeat said cycle, while the crane 9 delivers onto the ingress container-supporting pedestal 8 a new container C to be stacked and retrieves the just withdrawn container C which has been laid down onto the egress container-supporting pedestal 8'.

If desired, and particularly at ground level, the invention may also provide a transfer carriage to transfer the containers between the two lifting units 3 at the two ends of at least one of the corridors 1 of the vertical stacking terminal. For this purpose, the crane 9 at an end side of the terminal may lay down a container on a suitable transit container-supporting pedestal, located beside the lifting unit 3. An ingress carriage 6 or egress carriage 6' located below the lifting unit picks up the container C from the transit container-supporting pedestal and transfers it onto said transfer carriage which will reach the lifting unit 3 located at the opposite end side of the terminal, where an ingress or egress carriage 6 or 6', located below the lifting unit, picks up the container from the transfer carriage and delivers it to the container-holding means of said lifting unit.

Each lifting unit may also be used for the simple transfer of a robot carriage 4 from one tier to another, while its beams 133 and runway sections 105 are in the lowered position, so that the robot carriage 4 available at a tier may enter the cabin 33 of the lifting unit 3 and get out therefrom after it has been transferred to another desired tier.

Of course, the invention is not limited to the embodiments here shown and described, but changes and modifications, especially of constructional nature, may be made thereto by utilizing, for example, technical or functional equivalents, without departing from the basic principle of the invention as claimed hereinafter.

**Claims**

1. A vertical stacking terminal for containers, comprising at least one corridor (1) having at both sides thereof a plurality of storage or stacking compartments (2) in a multiple-tier arrangement and designed to receive the containers (C), robot transfer carriages (4) being provided in said corridor and being movable along the corridor on horizontal runways (5) located at each tier or level of stacking compartments (2) and being intended to move the containers (C) horizontally along the corridor (1) and to introduce them into (ensilage) and retrieve them from (de-ensilage) said stacking compartments (2), while at least at one end of the corridor (1) there is provided a lifting unit (3) for moving the incoming and outgoing containers (C) vertically and for transferring them, if necessary, from a stacking compartment (2) to another, said lifting unit (3) being provided with its own container-holding means which consists of a suspending frame (spreader 37) for a container and receives a container (C) from the robot carriage (4) at that tier or delivers it thereto, while at ground level there are provided suitable ingress and egress transport means (6, 6') adapted to pick up a container (C) from a loading or ingress area and to deliver it to the container-holding means (37) of the lifting unit (3), and to pick up the container (C) from the container-holding means (37) of the lifting unit (3) and to transfer it to an unloading or egress area, characterized by the combination of the following features:

a) the lifting unit (3) is constituted by an elevator cabin (33),

b) the container-holding means (spreader 37) is located in the upper portion of the elevator cabin (33),

c) the elevator cabin (33) is provided at its bottom with two runway sections (105) adapted to get into alignment with the runways (5) at each tier of the stacking compartments (2) to permit the robot carriage (4) of each tier to enter the elevator cabin (33) and get out therefrom,

d) the container-holding means (spreader 37) has a limited vertical movement to lock and unlock the container (C) or is stationary in combination with means (15; 34, 36, 133) to raise and lower the container (C) in order to lock it to and unlock it · from the container-holding means (spreader 37).

2. A stacking terminal according to claim 1, characterized in that the means to raise and lower the container (C) comprises hydraulic jacks (15) on the robot carriage.

3. A stacking terminal according to claim 1, characterized in that to raise and lower the container (C), the runway sections (105) in the elevator cabin (33) are arranged on two corresponding beams (133) which are guided so as to move vertically within the structure of the cabin (33) and which may be moved to an upper position wherein they permit and facilitate the ingress into and egress from the elevator cabin, and if desired the transit through said cabin, of the ingress and egress transport means (6, 6') at ground level.

4. A stacking terminal according to claim 1, characterized in that said ingress and egress transport means (6, 6') at ground level are constituted by at least an ingress carriage (6) and an egress carriage (6') movable along rails, the ingress carriage (6) being movable between a loading area, where it receives a container (C) to be introduced into the terminal, and the elevator cabin (33) to deliver the container (C) to the container-supporting means (spreader 37) thereof, and the egress carriage (6') being movable between the elevator cabin (33) to retrieve an outgoing container (C) therefrom and an unloading area wherein it discharges said container.

5. A stacking terminal according to claim 4, characterized in that beside the rails whereon the ingress and egress carriages (6, 6') are movable at one side of the lifting unit (3) at the corresponding end side of the terminal there is provided at least an ingress container-supporting pedestal (8) whereon a container (C) is laid down by any suitable handling means, for example a portal or semi-portal crane (9), and wherefrom a container is picked up by the ingress carriage (6) to be delivered to the container-holding means (spreader 37) in the lifting unit (3), while at the other side of the lifting unit there is provided at least one egress container-supporting pedestal (8') whereon an outgoing container (C) picked up from the container-holding means (spreader 37) in the lifting unit (3) is laid down by an egress carriage (6'), said container being picked up from said egress container-supporting pedestal (8') by any suitable handling means, for example the same portal or semi-portal crane (9).

6. A stacking terminal according to claim 4, characterized in that each ingress carriage (6) and egress carriage (6') is provided with at least one transfer trolley (41) which carries the container (C) in combination with raising and lowering means (15) thereof and may get off laterally, from the respective ingress or egress carriage (6, 6'), on transverse guides arranged thereon and· on a container-supporting pedestal (8, 8') close to one side thereof, to pick up therefrom an incoming container or to deliver thereon an outgoing container.

7. A stacking terminal according to claim 7, characterized in that an ingress carriage (6) and an egress carriage (6') are moved simultaneously in such a manner whereby the ingress carriage (6) is below the lifting unit (3) the egress carriage (6') is beside an egress container-supporting pedestal (8'), whereas when the egress carriage (6') is below the lifting unit (3) the ingress carriage (6) is beside an ingress container-supporting pedestal (8).

8. A stacking terminal according to claim 7, characterized in that it comprises two or more ingress container-supporting pedestals (8) or areas and/or two or more egress container-supporting pedestals (8') or areas.

9. A stacking terminal according to claim 1, characterized in that each robot carriage (4) comprises a bridge crane (11) movable on the runways (5) at stacking level and provided with a transfer trolley (13) carrying the container (C) in combination with means (15) to raise and to lower it and adapted to get off — with the aid of actuating means — from either end side of the bridge crane, moving on runways (17, 18) provided on said bridge canal and in each stacking compartment (2) and transverse to the runways (5) at the stacking level, so as to introduce and lay down (ensilage) an incoming container (C) into a stacking compartment (2) or to pick up and withdraw (de-ensilage) an outgoing character (C) from a stacking compartment (2).

10. A stacking terminal according to claim 9, characterized in that said actuating means for the transfer trolley (13) are constituted by a slow bottom slider (20) and a fast top slider (19), both interposed between the bridge crane (11) and transfer trolley (13) and slidably guided in the same direction as the latter, the slow slider (20) having affixed to both ends thereof at least one chain (21) which is passed around a driving sprocket wheel (23) mounted in the intermediate portion of the bridge crane (11), at least another chain (25) being secured to the intermediate portion of the bridge crane (11) and to the intermediate portion of the top fast slider (19) and being passed around direction-changing sprocket wheels (24) provided at both ends of the slow bottom slider (20), and at least one further chain (28) being secured to the intermediate portion of the transfer trolley (13) and to the intermediate portion of the bottom slow slider (20) and being passed around direction-changing sprocket wheels (30) provided at the ends of the top fast slider (19).

11. A stacking terminal according to claim 1, characterized in that it comprises at least two parallel corridors with associated stacking compartments, one of said corridors and respective stacking compartments being intended for containers of a size which is different from that of the containers to be stacked in the stacking compartments of the other corridor.

12. A stacking terminal according to claim 1, characterized in that each corridor is provided with a lifting unit (3) at each end thereof.

## Patentansprüche

1. Eine Vorrichtung zum senkrechten Stapeln von Behältern, beinhaltend mindestens einen Gang (1), der an seinen beiden Seiten eine Vielzahl von Speicher- oder Stapelfächern (2) in einer mehretagigen Anordnung und zur Aufnahme der Behälter (C) hat, wobei Roboter Transferwagen (4) in dem genannten Gang vorgesehen sind und längs des Ganges auf horizontalen Laufbahnen (5) bewegbar sind, die in jeder Etage oder Niveau der Stapelfächer (2) angeordnet sind und mit denen die Behälter (C) horizontal längs des Ganges (1) bewegbar und in die genannten Stapelfächer (2) einführbar (Einspeichrung) und rückholbar (Entnahme) sind, während zumindest an einem Ended des Ganges (1) eine Hubeinheit (3) vorgesehen ist, um die ankommenden und abgehenden Behälter (C) vertikal zu bewegen und um sie, falls erforderlich, von einem Stapelfach (2) zu einem anderen zu tranferieren, welche Hubeinheit (3) mit ihren eigenen Behälterhaltemitteln versehen ist, die aus einem schwebend haltenden Rahmen (Spreizer 37) für einen Behälter bestehen und die einen Behälter (C) von den Roboter Wagen (4) in der Etage erhalten oder an diesen abgeben, während am Bodenniveau geeignete Eingangs- und Ausgangstransportmittel (6, 6') vorgesehen sind, die darauf ausgelegt sind, einen Behälter (C) von einer Belade- oder Eingangszone aufzunehmen und ihn den Behälter-Haltemitteln (37) der Hubeinheit (3) zu übergeben, und um einen Behälter (C) von den Behälter-Haltemitteln (37) der Hubeinheit (3) aufzunehmen und ihn zu einer Entlade- oder Ausgangszone zu transferieren, gekennzeichnet durch die Kombination der folgencen Merkmale:

a) Die Hubeinheit (3) ist durch eine Aufzugkabine (33) gebildet,

b) die Behälter-Haltemittel (Spreizer 37) sind im oberen Bereich der Aufzugkabine (33) angeordnet,

c) die Aufzugkabine (33) ist an ihrem Boden mit zwei Laufbahnabschnitten (105) versehen, die Fluchtungslage mit den Laufbahnen (5) in jeder Etage der Stapelfächer (2) bringbar sind, um es dem Roboter Wagen (4) einer jeden Etage zu ermöglichen, in die Aufzugkabine (3) einzufahren und aus ihr herauzszufahren,

d) die Behälter-Haltemittel (Spreizer 37) haben eine vertikal begrenzte Bewegung zum Verriegeln und Entriergeln des Behälters (C) oder sie sind stationär in Kombination mit Mitteln (15; 34, 36, 133) zum Anheben und Senken des Behälters (C), um ihn mit den Behälter-Haltemmitteln (Spreizer 37) zu verriegeln oder ihn von ihnen zu entriegeln.

2. Eine Stapelvorrichtung nach Anspruch 1, dadurch gekennzeichnet, daß die Mittel zum Anheben und Absenken des Behälters (C) eine hydraulische Hubvorrichtung (15) auf dem Roboter Wagen (4) beinhalten.

3. Eine Stapelvorrichtung nach Anspruch 1, dadurch gekennzeichnet, daß zum Anheben und Absenken des Behälters (C) die Laufbahnabschnitte (105) in der Aufzugkabine (33) auf zwei entsprechenden Balken (133) angeordnet sind, die so geführt sind, daß sie sich vertikal innerhalb des Aufbaues der Kabine (33) bewegen und die in eine obere Stellung bewegt werden können, in der sie den Eingang und den Ausgang in die Aufzugkabine hineine und aus ihr heraus und gegebenenfalls auch den Durchlauf durch die Kabine für die Eingangs- und Ausgangstransportmittel (6, 6') am Niveau des Bodens erlauben und erleichtern.

4. Eine Stapelvorrichtung nach Anspruch 1, dadurch gekennzeichnet, daß die genannten Eingangs- und Ausgangstransportmittel (6, 6') am Bodenniveau durch mindestens einen Eingangswagen (6) und einen Ausgangswagen (6') gebildet sind, die längs Schienen bewegbar sind, wobei der Eingangswagen (6) zwischen einer Beladezone, in der er einen in die Vorrichtung einzugebenden Behälter (C) empfängt und der Aufzugkabine (33) bewegbar ist, um den Behälter (C) zu den Behälter-Haltemitteln (Spreizer 37) der Kabine abzugeben und wobei der Ausgangswagen (6') zwischen Aufzugkabine (33) zwecks Rückholung eines abgehenden Behälter (C) aus dieser und einer Abgabezone bewegbar ist, in der der Behälter abgeführt wird.

5. Eine Stapelvorrichtung nach Anspruch 4, dadurch gekennzeichnet, daß neben den Schienen, auf denen die Eingangs- und Ausgangswagen (6, 6') bewegbar sind, auf der einen Seite der Hubeinheit (3) an der entsprechenden Endseite der Vorrichtung mindestens ein Eingangs-Behälter-Auflagedrgestell (8) vorgesehen ist, auf dem ein Behälter (C) von irgendeinem geeigneten Handhabungsmittel, beispielsweise einem Portal- oder Halbportalkran (9) abgelegt wird und von dem ein Behälter, der zu den Behälter-Haltemitteln (Spreizer 37) in der Hubeinheit (3) gebracht werden soll, von dem Eingangswagen (6) aufgenommen wird, während an der äußeren Seite der Hubeinheit mindestens ein Ausgangs-Behälter-Auflagergestell (8') vorgesehen ist, auf dem ein ausgehender Behälter (C), der von den Behälter-Haltemitteln (Spreizer 37) in der Hubeinheit (3) aufgenommen wurde, von einem Ausgangswagen (6') abgelegt wird, wobei der genannte Behälter von dem genannten Ausgangs-Behälter-Auflagergestell (8') durch irgendein geeignetes Handhabungsmittel, beispielsweise dem gleichen Portal- oder Halbportalkran (8) aufgenommen wird.

6. Eine Stapelvorrichtung nach Anspruch 4, dadurch gekennzeichnet, daß jeder Eingangswagen (6) und Ausgangswagen (6') mit mindenstens einem Laufkarren (41) versehen ist, der den Behälter (C) in Kombination mit Mitteln (15) zum Heben und Senken darauf trägt und der von den jeweiligen Eingangs- und Ausgangswagen (6, 6') seitlich fortbewegbar ist auf Querführungen, die darauf angeordnet sind und auf eine Behälter-Auflagergestell (8, 8') nahe an ihrer einen Seite, um von diesem einen eingehenden Behälter aufzunehmen oder um darauf einen ausgehenden Behälter abzugeben.

7. Eine Stapelvorrichtung nach Anspruch 4, dadurch gekennzeichnet, daß ein Eingangswagen (6) und ein Ausgangswagen (6') simultan in einer solchen Weise bewegt werden, daß, wenn ein Eingangswagen (6) sich unter der Hubeinheit (3) befindet, der Ausgangwagen (6') sich neben einem Ausgangs-Behälter-Auflagergestell (8') befindet, während, wenn der Ausgangswagen (6') sich unter der Hubeinheit (3) befindet, der Eingangswagen (6) sich neben einen Eingangs-Behälter-Auflagergestell (8) befindet.

8. Eine Stapelvorrichtung nach Anspruch 7, dadurch gekennzeichnet, daß sie zwei oder mehr Eingangs-Behälter-Auflagergestelle (8) oder entsprechende Zonen und/oder zwei oder mehr Ausgangs-Behälter-Auflagergestelle (8') oder entsprechende Zonen beinhaltet.

9. Eine Stapelvorrichtung nach Anspruch 1, dadurch gekennzeichnet, daß jeder Roboter Wagen (4) eine Ladebrücke (11) beinhaltet, die am Stapelniveau auf den Laufbahnen (5) bewegbar ist und die mit einem Transferkarren (13) versehen ist, der den Behälter (C) in Kombination mit Mitteln (15) zu seinem Heben und Senken trägt und der darauf ausgelegt ist, mit Hilfe von Betätigungsmitteln von jeder Endseite der Ladebrücke wegzufahren, wobei er sich auf Laufbahnen (17, 18) bewegt, die auf der genannten Ladebrücke und in jedem Stapelfach (2) querliegend zu den Laufbahnen (5) am Stapelniveau vorgesehen sind, um einen ankommenden Behälter (C) in ein Stapelfach (2) einzuführen und niederzulegen (Einspeicherung), oder um einen ausgehenden Behälter (C) aus einem Stapelfach (2) aufzunehmen und zurückzuziehen (Ausgabe).

10. Eine Stapelvorrichtung nach Anspruch 9, dadurch gekennzeichnet, daß die genannten Betätigungsmittel für den Transferkarren (13) durch einen langsamen Bodengleiter (20) und durch einen schnellen Obergleiter (19) gebildet sind, die beide zwischen der Ladebrücke (11) und dem Transferkarren (13) angeordnet und in der gleichen Richtung wie der letztere gleitend geführt sind, wobei an beiden Enden des langsamen Gleiters (20) mindestens eine Kette (21) befestigt ist, die um ein treibendes Kettenrad (23) läuft, das in dem mittleren Bereich der Ladebrücke (11) angeordnet ist und mindestens eine weitere Kette (25) an dem mittleren Bereich der Ladebrücke (11) sowie an dem mittleren Bereich des schnellen Obergleiters (19) befestigt ist und um richtungsändernde Kettenräder (24) läuft, die an den beiden Enden des langsamen Bodengleiters (20) angeordnet sind und mindestens eine weitere Kette (28) an dem mittleren Bereich des Transferkarrens (13) und an dem mittleren Bereich des langsamen Bodengleiters (20) befestigt ist und um richtungsändernde Kettenräder (30) läuft, die an den Enden des schnellen Obergleiters (19) angeordnet sind.

11. Eine Stapelvorrichtung nach Anspruch 1, dadurch gekennzeichnet, daß sie mindestens zwei parallele Gänge mit zugeordneten Stapelfächern aufweist, wobei einer der Gänge und die jeweiligen Stapelfächer für Behälter eine Größe vorgesehen sind, die unterschiedlich von derjenigen der Behälter ist, die in den Stapelfächern des anderen Ganges gestapelt werden sollen.

12. Eine Stapelvorrichtung nach Anspruch 1, dadurch gekennzeichnet, daß jeder Gang an jedem seiner Enden mit einer Hubeinrichtung (3) versehen. ist.

**Revendications**

1. Une installation d'entreposage vertical pour des conteneurs, comprenant au moins un couloir (1) de chacun des côtés duquel se trouve un ensemble de compartiments de stockage ou d'entreposage (2) répartis en une configuration à plusieurs étages et conçus de façon à recevoir les conteneurs (C), l'allée étant équipée de chariots robotisés (4) qui peuvent se déplacer le long de l'allée sur des chemins de roulement horizontaux (5) situés à chaque étage ou niveau de compartiments d'entreposage (2) et qui sont destinés à déplacer horizontalement les conteneurs (C) le long de l'allée (1), et à les introduire (opération de stockage) dans les compartiments d'entreposage (2), et à les extraire (opération de déstockage) des compartiments d'entreposage (2), tandis qu'une extrémité au moins de l'allée (1) est équipée d'un appareil de levage (3) destiné à déplacer verticalement les conteneurs entrants et sortants (C) et à les transférer, si nécessaire, d'un compartiment d'entreposage (2) à un autre, cet appareil de levage (3) comportant ses propres moyens de préhension de conteneur qui consistent en un cadre de suspension (cadre de levage 37) pour un conteneur, et qui reçoivent un conteneur (C) à partir du chariot robotisé (4) se trouvant à cet étage, ou qui transmettent le conteneur au chariot robotisé, tandis qu'au niveau du sol se trouvent des moyens de transport d'arrivée et de départ appropriés (6, 6') conçus de façon à enlever un conteneur (C) se trouvant dans un aire de chargement ou d'arrivée, et à le transmettre aux moyens de préhension de conteneur (37) de l'appareil de levage (3), et à enlever le conteneur (C) se trouvant dans les moyens de préhension de conteneur (37) de l'appareil de levage (3) et à le transférer vers une aire de déchargement ou de départ, caractérisée par la combinaison des caractéristiques suivantes:

a) l'appareil de levage (3) est constitué par une benne de monte-charge (33),

b) les moyens de préhension de conteneur (cadre de levage 37) se trouvent dans la partie supérieure de la benne de monte-charge (33),

c) la benne de monte-charge (33) comporte à sa partie inférieure deux sections de chemin de roulement (105) prévues pour venir en alignement avec les chemins de roulement (5) à chaque étage des compartiments d'entreposage (2), pour permettre au chariot robotise (4) de chaque étage d'entrer dans la benne de monte-charge (33) et de sortir de cette dernière,

d) les· moyens de préhension de conteneur (cadre de levage 37) ont une mouvement vertical limité pour verrouiller et déverrouiller le conteneur (C), ou bien ils sont fixes et sont combinés avec des moyens (15; 34, 36, 133) destinés à faire monter et descendre le conteneur (C) afin de la verrouiller aux moyens de préhension de conteneur (cadre de levage (37) et de le déverrouiller des ces derniers.

2. Une installation d'entreposage selon la revendication 1, caractérisée en ce que les moyens destinés à faire monter et descendre le conteneur (C) comprennent des vérins hydrauliques (15) sur le chariot robotisé (4).

3. Une installation d'entreposage selon la revendication 1, caractérisée en ce que pour faire monter et descendre le conteneur (C), les sections des chemin de roulement (105) dans la benne de monte-charge (33) sont éablies sur deux poutres correspondantes (133), qui sont guidées de façon à se déplacer verticalement à l'intérieur de la structure de la benne (33), et qui peuvent être déplacées vers une position supérieure dans laquelle elles permettent et facilitent l'entrée dans la benne de monte-charge et la sortie de cette dernière, et si on le désire, le transit par la benne des moyens de transport d'arrivée et de départ (6, 6') se trouvant au niveau du sol.

4. Une installation d'entreposage selon la revendication 1, caractérisée en ce que les moyens de transport d'arrivée et de départ (6, 6') au niveau du sol sont constitués par au moins un chariot d'arrivée (6) et un chariot de départ (6') pouvant se déplacer sur des rails, le chariot d'arrivée (6) pouvant se déplacer entre un aire de chargement, dans laquelle il reçoit un conteneur (C) à introduire dans l'installation, et la benne de monte-charge (3), pour transmettre le conteneur (C) aux moyens de préhension de conteneur (cadre de levage 37) de la benne, et le chariot de départ (6') pouvant se déplacer entre la benne de monte-charge (33), pour enlever dans celle-ci un conteneur sortant (C), et une aire de déchargement dans laquelle il décharge le conteneur.

5. Une installation d'entreposage selon la revendication 4, caractérisée en ce qu'à côté des rails sur lesquels se déplacent les chariots d'arrivée et de départ (6, 6'), d'un côté de l'appareil de levage (3) se trouvant à l'extrémité correspondante de l'installation, se trouve au moins une plate-forme de support de conteneur d'arrivée (8), sur laquelle un conteneur (C) est déposé par des moyens de manutention appropriés quelconques, par exemple un portique ou un semi-portique de manutention (9), et à partir de laquelle un conteneur est enlevé par le chariot d'arrivée (6) pour être transféré aux moyens de préhension de conteneur (cadre de levage 37) dans l'appareil de levage (3), tandis que de l'autre côté de l'appareil de levage se trouve au moins une plate-forme de support de conteneur de départ (8') sur laquelle un conteneur sortant (C), enlevé dans le moyens de préhension de conteneur (cadre de levage 37) dans l'appareil de levage (3), est déposé par un chariot de départ (6'), ce conteneur étant enlevé de la plate-forme de support de conteneur de départ (8') par des moyens de manutention appropriés quelconques, par exemple le même portique ou semi-portique de manutention (9).

6. Une installation d'entreposage selon la revendication 4, caractérisée en ce que chaque chariot d'arrivée (6) et chariot de départ (6') comporte au moins un chariot de transfert (41) qui porte le conteneur (c), en combinaison avec des moyens d'élévation et d'abaissement (15) du chariot de transfert, et qui peut sortir latéralement du chariot d'arrivée ou de départ respectif (6, 6'), sur des guides transversaux qui sont disposés sur ce dernier et sur une plate-forme de support de conteneur (8, 8') proche d'un côté du chariot d'arrivée ou de départ, pour enlever un conteneur entrant se trouvant sur cette plate-forme, ou pour déposer sur cette dernière un conteneur sortant.

7. Une installation d'entreposage selon la revendication 6, caractérisée en ce qu'un chariot d'arrivée (6) et un chariot de départ (6') sont déplacés simultanément d'une manière telle que lorsque le chariot d'arrivée (6) est au-dessous de l'appareil de levage (3), le chariot de départ (6') est à côté d'une plate-forme de support de conteneur de départ (8'), tandis que lorsque le chariot de départ (6') est au-dessous de l'appareil de levage (3), le chariot d'arrivée (6) est à côté d'une plate-forme de support de conteneur d'arrivée (8).

8. Une installation d'entreposage selon la revendication 7, caractérisée en ce qu'il comprend au moins deux plates-formes (8) ou aires de support de conteneur d'arrivée, et/ou au moins deux plates-formes (8') ou aires de support de conteneurs de départ.

9. Une installation d'entreposage selon la revendication 1, caractérisée en ce que chaque chariot robotisé (4) comprend un pont mobile (11) qui peut se déplacer sur les chemins de roulement (5) au niveau d'entreposage, et qui est équipé d'un chariot de transfert (13) portant le conteneur (C), en combinaison avec des moyens (15) pour le faire monter et le faire descendre, ce chariot de tranfert étant conçu de façon à sortir par une extrémité ou l'autre du pont mobile, avec l'aide de moyens d'actionnement, et à se déplacer sur des chemins de roulement (17, 18) établis sur le pont mobile et dans chaque compartiment d'entreposage (2), et dirigés transversalement par rapport aux chemins de roulement (5) au niveau d'entreposage, de façon à introduire et à déposer (opération de stockage) un conteneur entrant (C) dans un compartiment d'entreposage (2) ou à prendre un conteneur sortant (C) dans un compartiment d'entreposage (2) et à l'extraire de ce compartiment (opération de déstockage).

10. Une installation d'entreposage selon la revendication 9, caractérisée en ce que les moyens d'actionnement pour le chariot de transfert (13) sont constitués par une glissière inférieure lente (20) et une glissière supérieure rapide (19), toutes deux intercalées entre le pont mobile (11) et le chariot de transfert (13) et guidées de façon à coulisser dans la même direction que ce dernier, les deux extrémités de la glissière lente (20) étant fixée à au moins un chaîne (21) qui passe autour d'une roue à chaîne d'entraînement (23) montée dans la partie intermédiaire du pont mobile (11), tandis qu'au moins une autre chaîne (25) est fixée à la partie intermédiaire du pont mobile (11) et à la partie intermédiaire de la glissière supérieure rapide (19) et passe autour de roues à chaîne de changement de direction (24) qui se trouvent aux deux extrémités de la glissière inférieure lente (20), et au moins une chaîne supplémentaire (28) est fixée à la partie intermédiaire du chariot de transfert (13) et à la partie intermédiaire de la glissière inférieure lente (20), et passe autour de roues à chaîne de changement de direction (30) qui se trouvent aux extrémités de la glissière supérieure rapide (19).

11. Une installation d'entreposage selon la revendication 1, caractérisée en ce qu'elle comprend au moins deux allées parallèles avec des compartiments d'entreposage associés, l'une des ces allées et des compartiments d'entreposage respectifs étant prévus pour des conteneurs d'une taille différente de celle des conteneurs qui doivent être entreposés dan la compartiments d'entreposage de l'autre allée.

12. Une installation d'entreposage selon la revendication 1, caractérisée en ce que chaque allée est équipée d'un appareil de levage (3) à chacune de ses extrémités.

Fig.1

Fig.2

Fig.3

Fig. 4

Fig.5

0 133 472

Fig.6

Fig. 8

Fig. 7

0 133 472

Fig.9

Fig.10

0 133 472

Fig.11

Fig.12

0 133 472

Fig. 13

0 133 472